# EUROPÄISCHE PATENTSCHRIFT

(11) **EP 2 780 279 B1**
(45) Veröffentlichungstag und Bekanntmachung des Hinweises auf die Patenterteilung: **16.08.2017**
(21) Anmeldenummer: 12775135.2
(22) Anmeldetag: 26.09.2012
(51) Int. Cl.: B82B 3/00, G01N 27/447

(54) **VERFAHREN UND VORRICHTUNG ZUR GERICHTETEN IMMOBILISIERUNG VON NANO- UND MIKROOBJEKTEN AUF EINER SUBSTRATOBERFLÄCHE UND DAMIT ERHALTENE IMMOBILISATE**
METHOD AND DEVICE FOR DIRECTED IMMOBILISATION OF NANO- AND MICRO-OBJECTS ON A SUBSTRATE SURFACE AND IMMOBILISATES OBTAINED THEREBY
PROCÉDÉ ET DISPOSITIF D'IMMOBILISATION ORIENTÉE DE NANO- ET MICRO-OBJETS SUR LA SURFACE D'UN SUBSTRAT ET SYSTÈMES IMMOBILISÉS AINSI OBTENUS

(30) Priorität: 15.11.2011 DE 102011118600
(43) Veröffentlichungstag der Anmeldung: 24.09.2014
(73) Patentinhaber: Fraunhofer-Gesellschaft zur Förderung der angewandten Forschung e.V., 80686 München (DE)
(72) Erfinder: BIER, Frank, 14482 Potsdam (DE); HÖLZEL, Ralph, 14129 Berlin (DE)
(74) Vertreter: Katzameyer, Michael
(86) Internationale Anmeldenummer: PCT/EP2012/004035
(87) Internationale Veröffentlichungsnummer: WO 2013/071994

(56) Entgegenhaltungen:
- WO-A1-2011/034533

## Beschreibung

Die Immobilisierung von Mikro- und Nanoobjekten wie z.B. Molekülen, insbesondere Biomolekülen und biomimetischen Molekülen, und deren Kopplung an Oberflächen in geordneter und gerichteter Weise ist ein häufiges Problem der Biotechnologie, Chemie oder Biochemie. Immobilisierte Moleküle werden bei dem Aufbau von Beschichtungen aller Art eingesetzt. Besonders in der Biotechnologie und der Bioanalytik wird von immobilisierten Katalysatoren oder Bindemolekülen Gebrauch gemacht.

Die dazu heute häufig eingesetzten Verfahren führen aber in der Regel zu Kopplungen der Moleküle an der jeweiligen Oberfläche in statistischer Weise, d.h. sie weisen keine oder nur partielle Ausrichtung auf und viele der immobilisierten Moleküle sind aufgrund ungünstiger Orientierung durch die Immobilisierung nicht mehr für den eigentlichen Prozess der Messung, Bindung oder Katalyse zugänglich. Wenn z.B. das aktive Zentrum eines Enzyms der Immobilisierungsfläche zugewandt ist, wird das entsprechende Substrat nicht oder nur sehr eingeschränkt dorthin gelangen können und wird infolgedessen kaum umgesetzt werden können.

Zur Erhöhung der Effizienz der aktiven Partition (also z.B. des aktiven Zentrums eines Enzyms oder der Bindungsstelle eines Antikörpers) bei den Immobilisaten ist eine gerichtete Immobilisierung erforderlich, die die aktiven Partitionen von der Kopplungsstelle fern hält und durch die Immobilisierungsprozedur hindurch aktiv erhält.

Die Ineffizienz herkömmlicher Immobilisierungsmethoden führt einerseits zu höheren Kosten, da mehr Biomoleküle zur Immobilisierung angeboten werden müssen als am Ende effektiv zum Einsatz kommen. Andererseits setzt sie auch eine Grenze bei der Miniaturisierung, da der Anteil aktiver Moleküle auf kleinen Flächen zu gering für eine sinnvolle Anwendung sein kann bzw. die erzeugten Signale zu gering werden. Könnten alle oder die große Mehrzahl der immobilisierten Moleküle in aktiver Form vorliegen, könnte auch von sehr kleinen Flächen ausreichend Signal gewonnen werden.

Vor diesem Hintergrund bestand die der vorliegenden Erfindung zugrunde liegende Hauptaufgabe in der Bereitstellung eines neuen und verbesserten Verfahrens zur gerichteten Immobilisierung von Nano- und Mikroobjekten auf einer Substratoberfläche, mit dem die geschilderten Nachteile des Standes der Technik vermieden oder verringert werden können. Weitere verwandte Aufgaben waren die Bereitstellung geeigneter Vorrichtungen zur Durchführung dieses Verfahrens und die Bereitstellung der gerichteten Immobilisate selbst.

Diese Aufgaben werden erfindungsgemäß gelöst mit dem Verfahren nach Anspruch 1, der Vorrichtung nach Anspruch 12 und dem Immobilisat nach Anspruch 15. Zusätzliche Aspekte und bevorzugte Ausführungsformen der Erfindung sind Gegenstand der weiteren Ansprüche.

Das Verfahren zur gerichteten Immobilisierung von Nano- oder Mikroobjekten auf einer Substratoberfläche gemäß Anspruch 1 umfasst mindestens die folgenden Schritte
a) Bereitstellen einer rauen Substratoberfläche, welche eine leitfähige Schicht umfasst, wobei die Rauigkeit der Substratoberfläche durch nanometerskalige erhabene Strukturen, welche durch Aufbringen einer Paste mit einer Körnung im Nanometerbereich oder durch chemisches oder galvanisches Aufwachsen elektrisch leitfähiger Nanostrukturen gebildet werden, vorgegeben ist, sodass die Substratoberfläche eine Vielzahl von Erhebungen mit lokalen Krümmungsradien in der Dimension der zu immobilisierenden Objekte aufweist,
b) Bereitstellen von polarisierbaren Nano- oder Mikroobjekten, die in einem elektrischen Wechselfeld einen induzierten Dipol aufweisen, auf oder in der Nähe der Substratoberfläche,
c) Anlegen einer elektrischen Wechselspannung zwischen der Substratoberfläche und mindestens einer Gegenelektrode, wodurch ein elektrisches Wechselfeld mit lokalen Feldgradienten entsteht und die polarisierten Nano- oder Mikroobjekte bevorzugt von den Erhebungen der Substratoberfläche angezogen und mit ihrer Dipolachse entsprechend der elektrischen Feldlinien ausgerichtet werden.

Das erfindungsgemäße Verfahren sieht die Immobilisierung von Molekülen an Oberflächen verschiedener Ausprägungen unter der Wirkung eines elektrischen Wechselfeldes vor. In einem elektrischen Wechselfeld werden in jeder Materie (dieser Effekt ist über viele Größenordnungen skalierbar), zum Beispiel auch in Makromolekülen, Dipole induziert, mit denen sich ein Molekül unmittelbar beeinflussen lässt. Durch den induzierten Dipol wird das Molekül parallel zu den elektrischen Feldlinien ausgerichtet; dies gilt auch für per se polare Moleküle. Bei inhomogenen Feldern wirkt auf die Dipole eine Kraft, die sie in der Regel in den Bereich der höheren Feldstärke bewegt.

Verwendet man eine nanorauhe Oberfläche als eine Elektrode, so bilden sich an den Nanospitzen der Oberfläche starke Feldgradienten aus, in denen einzelne Moleküle angezogen werden. Nur für Objekte, die sowohl hinsichtlich ihrer Ladungsverteilung als auch ihrer Geometrie kugelsymmetrisch sind, kommt es zu keiner Orientierung des Objektes. Alle nicht-kugelsymmetrischen Objekte erfahren ein Drehmoment, das sie mit ihrer Dipolachse parallel zu den Feldlinien ausrichtet.
Damit erreicht man nun gleichzeitig zwei vorteilhafte Effekte:
(1) Unter der Einwirkung eines elektrischen Wechselfeldes wird eine Verdichtung bzw. beschleunigte Adsorption der Moleküle an der Oberfläche erzwungen und
(2) sind alle Moleküle weitgehend orientiert und präsentieren im Idealfalle ihre Bindungsstellen oder aktiven Zentren in optimaler Weise.
Der dielektrophoretische Effekt an sich ist schon lange für Objekte der Mikroskopie wie zum Beispiel kolloidale Partikel oder lebende Zellen bekannt (Pohl, H. A., J. Appl. Phys. 22, 869 (1951); Pohl, H. A., Dielectrophoresis, 1978, Cambridge University Press). Voraussetzung ist ein induzierter Dipol, der im Objekt selbst induziert wird oder in dem aus dem Objekt und seiner näheren Umgebung gebildeten Gesamtsystem. Letzteres enthält die in polaren Lösungsmitteln sich ausbildende Gegenionenwolke, die ebenfalls polarisiert und orientiert wird. Durch Hölzel et al. (Physical Review Letters, 128102-1 (2005)) wurde gezeigt, dass dieser Effekt auch bei Raumtemperatur auf einzelne Moleküle angewandt werden kann (Hölzel et al. 2005). Yamamoto und Fujii (Nanotechnology 18, 495503 (2007)) beschreiben die mögliche Immobilisierung von einzelnen Biomolekülen an 7 bzw. 9 nadelförmigen, aus der Substratoberfläche herausragenden Nanoelektroden. Dadurch umfasst die Substratoberfläche Erhebungen mit lokalen Krümmungsradien in der Dimension der zu immobilisierenden objekte. In keiner der beiden Arbeiten wurde die gerichtete Immobilisierung einer Vielzahl von funktionellen Molekülen auf einer vollständig oder weitgehend rauen Substratoberfläche zur Optimierung ihrer Wirksamkeit beschrieben oder vorgeschlagen.

Als erfindungsgemäßes Substrat kommt grundsätzlich jedes Substrat in Betracht, welches eine leitfähige Oberflächenschicht umfasst und die erforderliche Rauigkeit aufweist oder damit versehen werden kann.

Einige geeignete und bevorzugte Substratmaterialien sind Metalle, z.B. Gold, Silicium, Metalloxide, z.B. Indium-ZinnOxid.

Da es sich um eine Feldwirkung handelt, die keinen Stromfluss im Raum zwischen Oberfläche und Gegenelektrode voraussetzt, kann die leitfähige Oberflächenschicht mit den Erhebungen auch von einer dünnen Isolatorschicht von wenigen nm Dicke überzogen sein. Vorzugweise liegt die Dicke der Isolatorschicht in einem Bereich von 1-10 nm.

Dicken, welche die Dimensionen der Krümmungsradien der Oberflächenrauhigkeiten wesentlich überschreiten, würden die Feldwirkungen erheblich reduzieren, da so die räumlichen Bereiche der stärksten Feldinhomogenität für die zu immobilisierenden Objekte nicht zugänglich wären. Solche Dicken heben die Wirksamkeit des Feldes zwar nicht auf, verringern sie jedoch beträchtlich.

Erfindungsgemäß wird die Rauhigkeit der Substratoberfläche durch nanometerskalige erhabene Strukturen, insbesondere in einem Bereich von 1-100 nm, vorzugsweise 1-50 nm, vorgegeben.

Solche nanometerskaligen Strukturen der Substratoberfläche werden erfindungsgemäß durch Aufbringen einer Paste mit einer Körnung im Nanometerbereich oder durch chemisches oder galvanisches Aufwachsen elektrisch leitfähiger Nanostrukturen, vorzugsweise selbstassemblierender Nanostrukturen, gebildet. Geeignete Strukturen können geordnet oder ungeordnet sein.

Diese Strukturen können durch Wachstum aus dem Material oder durch Anlagerung aus einem Sol oder aus einer Lösung erzeugt werden. Geeignete Verfahren sind im Stand der Technik bereits bekannt (z.B. Garner, D. M. und Zamin, N. Z. Mohd., Tech. Digest 17th Int. Vacuum Nanoelectronics Conf., 270 (2004)). Die resultierenden Strukturen, z. B. Nanoröhrchen, -stäbchen oder -kugeln, führen dann zu einer Feldinhomogenität, an der ein dielektrischer Effekt (DEP) auftritt. Die Erzeugung einer solchen Schicht könnte bereits mit dem DEP bewerkstelligt werden, indem eine Abscheidung von z.B. präformierten Nanoröhrchen unter Feldeinfluss erfolgt.

Die Anzahl der Erhebungen auf der erfindungsgemäßen rauen Substratoberfläche beträgt typischerweise mindestens 100, vorzugsweise mindestens 1000, mindestens 10000 oder mehr.

Typischerweise weisen die Erhebungen der Substratoberfläche einen mittleren Abstand im Bereich von 1-2000 nm, vorzugsweise 1-200 nm, z.B. 1-50 nm, auf.

In einer bevorzugten Ausführungsform der Erfindung wird die gewünschte Rauigkeit durch die Verwendung von Metall-Nanopartikeln, insbesondere Gold-Nanopartikeln, vorzugsweise in der Größe von 1-50 nm, bereitgestellt. Diese Partikel werden auf einer leitfähigen Unterlage beliebiger Beschaffenheit, vorzugsweise aus einem Substratmaterial wie oben angegeben, als Monolage fixiert. Damit wird die Oberfläche im obigen Sinne "nanorauh" und weist lokal viele Stellen mit engem Krümmungsradius auf, an denen die Moleküle angezogen werden. Die Schicht kann auch aus mehreren Monolagen aufgebaut sein, wenn gewährleistet ist, dass die Rauhigkeit durch die Packung der Partikel nicht eliminiert wird.

In einer anderen speziellen Anordnung der Erfindung werden die Erhebungen der Substratoberfläche, welche als Immobilisierungspunkte dienen, durch eine Anordnung (Array) mit einer Vielzahl von Nanoelektroden bereitgestellt.

Ein solches Array oder definiertes Muster solcher Nanometerelektrodenspitzen können beispielsweise durch bekannte Techniken der Mikroelektronik erzeugt werden.

Da es sich um eine Feldwirkung handelt, die keinen Stromfluss im Raum zwischen Elektrodenarray und Gegenelektrode voraussetzt, können die Elektroden auch von einer dünnen Isolatorschicht von wenigen nm Dicke überzogen sein.

Derartige Arrays von Nanoelektroden können mit Elektrodenabständen hergestellt werden, die groß genug sind, um bei der Beobachtung eine eindeutige Diskriminierung zwischen Ereignissen an verschiedenen Elektroden des Arrays zu ermöglichen. Bei Verwendung von fluoreszierenden Molekülen oder Molekülen (oder Nanopartikel) mit angehefteten Fluorochromen (Labeln) ergibt sich die Sichtbarkeit unmittelbar. Hiermit könnten die erfindungsgemäß verwendeten Nanoelektroden die Basis für Untersuchung einzelner Moleküle und kleiner statistischer Ensembles sein.

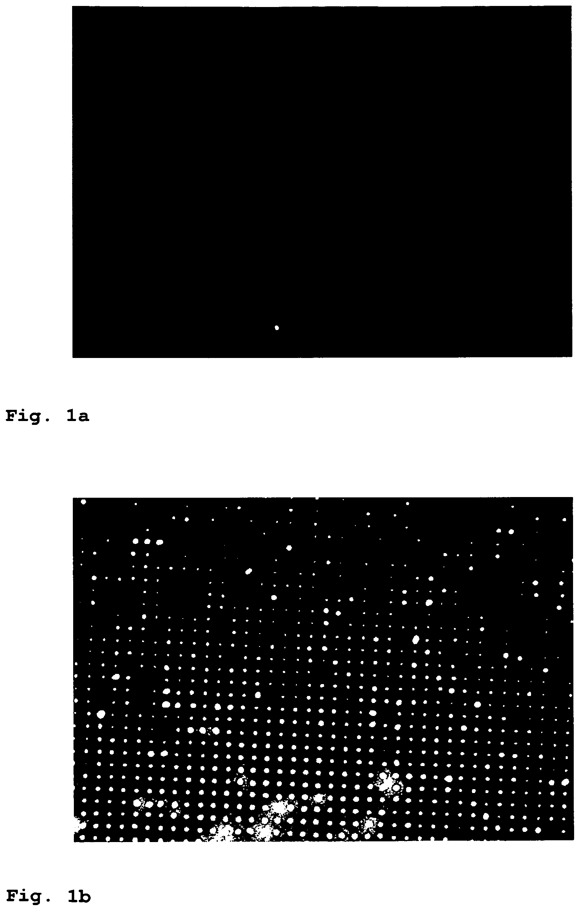

Eine praktische Realisierung mit fluoreszenzmarkierten Antikörpern als Nanoobjekten ist in Beispiel 1 und Fig. 1 gezeigt.

Diese und andere Anwendungen sind jedoch nicht auf spezielle Nanoelektroden-Arrays beschränkt sondern mit jeder nanorauen Oberfläche wie hier definiert realisierbar.

Wie oben und im folgenden Beispiel 1 erörtert, sind die lokalen Feldstärken des elektrischen Wechselfelds stark von der Geometrie und Topologie der Substratoberfläche abhängig. Bei dem erfindungsgemäßen Verfahren liegen die höchsten Feldstärken des elektrischen Wechselfelds typischerweise im Bereich von 0,5 MV/m bis 10 MV/m.

Typischerweise geschieht das Anlegen des elektrischen Wechselfeldes bei einer Wechselspannung im Bereich von 5 bis 100 V und einer Frequenz im Bereich von 1 kHz bis 20 MHz, vorzugsweise zwischen 100 kHz und 2 MHz.

Die erfindungsgemäß zu immobilisierenden Objekte sind vorzugsweise aus der Gruppe aus Molekülen, insbesondere Biomolekülen, Molekülclustern, Nanoaggregaten, Nano- und Mikropartikeln ausgewählt.

Die Biomoleküle können z.B. Proteine, Proteinkomplexe und Peptide, insbesondere Antikörper oder Enzyme, Nukleinsäuren, Lipide oder Saccharide umfassen.

In einer spezielleren Ausführungsform sind die zu immobilisierenden Objekte funktionelle Makromoleküle oder Molekülaggregate, beispielsweise Enzyme, Antikörper oder andere spezifisch bindende Moleküle, oder Katalysatoren, z.B. Biokatalysatoren.

In diesem Falle ist es bevorzugt, dass die Ausrichtung dieser Makromoleküle oder Molekülaggregate im elektrischen Feld so erfolgt, dass die aktiven Zentren oder funktionellen Bindungsstellen nach der Immobilisierung zugänglich bleiben.

Um dies sicherzustellen, können die funktionellen Moleküle nach der Immobilisierung einem Funktions- oder Aktivitätstest unterworfen und ungeeignete Kandidaten entweder ausgeschieden oder durch molekulares Engineering verändert werden. Dabei kann die Polarisierung und/oder Ausrichtung derjenigen Makromoleküle oder Molekülaggregate, die einen vorgegebenen Referenzwert in dem Funktions- oder Aktivitätstest nicht erreichen, durch Änderung der Ladungsverteilung und/oder Molekülgeometrie, z.B. durch Einführen oder Entfernen eines Substituenten, der eine Ladung trägt, so lange modifiziert werden, bis die gewünschte Polarisierung und/oder Ausrichtung erreicht ist.

So kann zum Beispiel durch geeignetes Einführen oder Entfernen einer geladenen Aminosäure in einem auszurichtenden Protein oder durch Veränderung der Molekülgeometrie die Polarisierung umgekehrt oder ausgerichtet werden.

Ein weiterer Aspekt der Erfindung betrifft eine Vorrichtung zur Durchführung des erfindungsgemäßen Verfahrens.

Eine erfindungsgemäße Vorrichtung zur gerichteten Immobilisierung von Nano- oder Mikroobjekten auf einer Substratoberfläche umfasst mindestens
a) eine raue Substratoberfläche, welche eine leitfähige Schicht umfasst, wobei die Rauigkeit der Substratoberfläche durch nanometerskalige erhabene Strukturen, welche durch Aufbringen einer Paste mit einer Körnung im Nanometerbereich oder durch chemisches oder galvanisches Aufwachsen elektrisch leitfähiger Nanostrukturen gebildet werden, vorgegeben ist, sodass die Substratoberfläche eine Vielzahl von Erhebungen, d.h. mindestens 100, vorzugsweise mindestens 1000 oder mindestens 10000 oder mehr, mit lokalen Krümmungsradien in der Dimension der zu immobilisierenden Objekte aufweist,
b) mindestens einer Gegenelektrode in der Nähe der Substratoberfläche, und
c) Mittel zur Anlegung einer elektrischen Wechselspannung zwischen der Substratoberfläche und der mindestens einen Gegenelektrode.

Die leitfähige Schicht kann frei liegen oder von einem dünnen, vorzugsweise 1-10 nm dicken, isolierenden Film überzogen sein.

In einer speziellen Ausführungsform dieser Vorrichtung wird die Rauigkeit der Substratoberfläche durch aufgebrachte Metall-Nanopartikel erzeugt.

Ein weiterer Aspekt der Erfindung betrifft eine immobilisierte Anordnung von polarisierten Nano- oder Mikroobjekten auf einer rauen Substratoberfläche, erhalten mit dem Verfahren nach einem der Ansprüche 1-14, welche ferner dadurch gekennzeichnet ist, dass eine Vielzahl der Nano- oder Mikroobjekte, d.h. mindestens 100, vorzugsweise mindestens 1000 oder mindestens 10000 oder mehr, in ausgerichteter Form auf der Substratoberfläche vorliegt.

In einer spezielleren Ausführungsform der Erfindung ist die immobilisierte Anordnung von polarisierten Nano- oder Mikroobjekten dadurch gekennzeichnet, dass die Anordnung in einem elektrischen Wechselfeld vorliegt.

Es ist jedoch auch möglich, durch eine geeignete Wahl der Feldstärke des elektrischen Wechselfeldes eine permanente Immobilisierung der Nano- und Mikroobjekte auf der Substratoberfläche zu erzielen, so dass die Anordnung und Ausrichtung auch nach Abschaltung des elektrisches Feldes erhalten bleibt.

Wie bereits erwähnt, ist die gerichtete Immobilisierung von Nano- und Mikroobjekten, insbesondere Biomolekülen, in der Analytik, insbesondere Bioanalytik, Diagnostik, der Biosensorik und in der Anwendung von molekularen Katalysatoren zum Beispiel in Biofuel-Zellen von herausragender Bedeutung. Dementsprechend betrifft ein wichtiger Aspekt der vorliegenden Erfindung die Anwendung der erfindungsgemäßen Verfahren, Vorrichtungen und Immobilisate auf all diesen Gebieten.

Durch die kontrollierte Orientierung der Moleküle wird die Effizienz der genannten Verfahren in großem Maße gesteigert. In der Bioanalytik führt dies zu erhöhter Sensitivität oder aber zu erweitertem Miniaturisierungspotenzial zum Beispiel für Mikroarrays, Submikroelektroden und hochintegrierte autonome Biosensoren. In der Katalyse, insbesondere auch biochemischen Katalyse, können neue Wege der molekularen Elektronik beschritten werden, indem die aktiven Zentren gezielt ausgerichtet werden.

### FIGURENBESCHREIBUNG

**Fig. 1** Konzentrierung und Immobilisierung fluoreszenzmarkierter Antikörpermoleküle im elektrischen Wechselfeld an einem Nanoelektrodenarray. a) vor Anlegen des Feldes, b) nach 45 s Feldapplikation. Elektrodenabstand 1,8 µm.

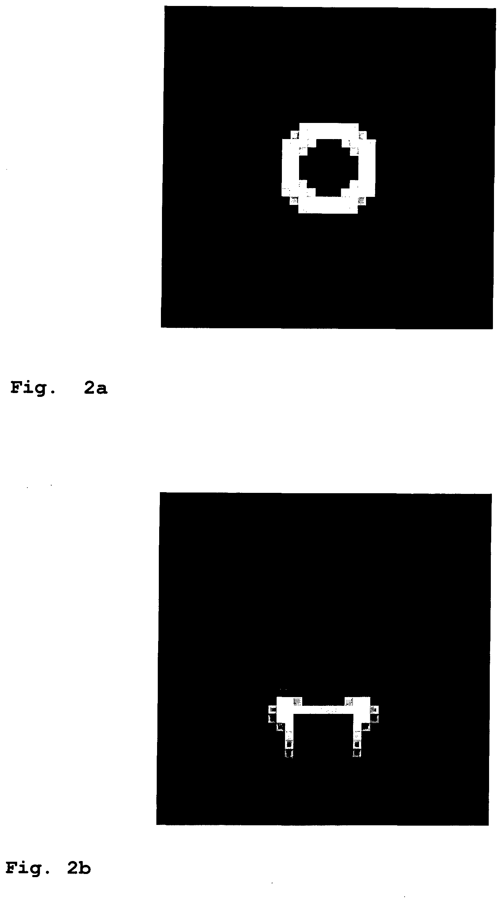

**Fig. 2** Berechnete räumliche Verteilung des elektrischen Feldgradienten grad |E²|. a) Feldverlauf innerhalb der xy-Ebene direkt oberhalb zylindrischer Nadelelektroden wie sie im Experiment zu Abb. 1 verwendet wurden. b) Feldverlauf innerhalb der xz-Ebene mittig durch eine Nadelelektrode. In der Graustufendarstellung steht Schwarz für den geringsten Feldgradienten, Weiß für den größten.

### BEISPIEL 1

### Gerichtete Immobilisierung an ein Array von Nanoelektroden auf einer Substratoberfläche

Fluoreszenzmarkierte Antimaus-Antikörper (IgE, Dy634-markiert) wurden in Reinstwasser gelöst und auf ein Array von in Siliciumdioxid eingebetteten, zylindrischen Metallelektroden gegeben, deren Oberkanten mit der Siliciumdioxidoberfläche fluchteten und die alle auf demselben elektrischen Potential lagen. Die transparente Gegenelektrode befand sich ca. 100 µm über der Elektrodenoberfläche. Es wurde eine Wechselspannung von 35 V bei der Frequenz 100 kHz angelegt. Fig. 1 demonstriert die erhaltenen Ergebnisse. Während das linke Bild, vor der Feldapplikation, fast ausschließlich nur eine geringe Hintergrundfluoreszenz zeigt, ist im rechten Bild nach 45 s Feldwirkung die Konzentrierung der Antikörpermoleküle an den Elektroden deutlich zu erkennen.

Bei länger andauernder Feldapplikation nimmt die Fluoreszenzintensität an den Elektroden zu. Das geschieht so lange, wie mehr Fluorophore aus dem Volumen über den Elektroden angezogen werden als durch Bleichen unsichtbar werden. Schließlich verarmt das Volumen so sehr, dass durch Bleichen der immobilisierten, antikörpergebundenen Fluorophore die Fluoreszenzintensität zurückgeht.

Die dielektrophoretische Wirkung ist proportional zum Gradienten des Quadrates der elektrischen Feldstärke grad |***E***² | (Pohl, H. A., Dielectrophoresis, 1978, Cambridge University Press). Dieser wiederum ist proportional zur quadrierten Potentialdifferenz zwischen Nanoelektrodenarray und Gegenelektrode sowie umgekehrt proportional zum quadrierten Abstand dieser Elektroden. Ferner ist er sehr stark von der Geometrie der Nanoelektroden abhängig. In einer Feldsimulation können die elektrische Feldstärke **E** als auch der Gradient grad |***E**²*| berechnet werden. Dabei zeigt sich (Fig. 2), dass die Feldwirkung am stärksten in unmittelbarer Nähe des oberen Randes der in Fig. 1 verwendeten zylindrischen Nanoelektroden ist.

Aus der für diese Experimente verwendeten Geometrie würde unter der simplen Annahme eines homogenen Feldes aus der verwendeten Spannung von 35 V und einem Elektrodenabstand von 100 µm eine elektrische Feldstärke von 0,35 MV/m folgen. Die Feldsimulation zeigt jedoch, dass nahe der Nanoelektroden die elektrische Feldstärke den etwa 15-fachen Wert erreicht, also ca. 5 MV/m. Die Werte für den Feldgradienten liegen dort zwischen ca. 10¹⁷ und 10²⁰ V²m⁻³ bei einem Krümmungsradius an den Kanten von 50 nm. Für ein Protein mit einer Diffusionskonstante in der Größenordnung 50 µm²s⁻¹ und einer experimentellen Einwirkdauer von ca. 1 s kann man für die Immobilisierung einen Schwellwert des Feldgradienten von etwa 10¹⁸ V²m⁻³ errechnen. Das bedeutet, dass diejenigen Moleküle immobilisiert werden, die sich innerhalb des Raumbereiches um die Nanoelektroden befinden, in dem dieser Wert überschritten wird.

## Patentansprüche

1. Verfahren zur gerichteten Immobilisierung von Nano- oder Mikroobjekten auf einer Substratoberfläche, umfassend
a) Bereitstellen einer rauen Substratoberfläche, welche eine leitfähige Schicht umfasst, wobei die Rauigkeit der Substratoberfläche durch nanometerskalige erhabene Strukturen, welche durch Aufbringen einer Paste mit einer Körnung im Nanometerbereich oder durch chemisches oder galvanisches Aufwachsen elektrisch leitfähiger Nanostrukturen gebildet werden, vorgegeben ist, sodass die Substratoberfläche eine Vielzahl von Erhebungen mit lokalen Krümmungsradien in der Dimension der zu immobilisierenden Objekte aufweist,
b) Bereitstellen von polarisierbaren Nano- oder Mikroobjekten, die in einem elektrischen Wechselfeld einen induzierten Dipol aufweisen, auf oder in der Nähe der Substratoberfläche,
c) Anlegen einer elektrischen Wechselspannung zwischen der Substratoberfläche und mindestens einer Gegenelektrode, wodurch ein elektrisches Wechselfeld mit lokalen Feldgradienten entsteht und die polarisierten Nano- oder Mikroobjekte bevorzugt von den Erhebungen der Substratoberfläche angezogen und mit ihrer Dipolachse parallel zu den elektrischen Feldlinien ausgerichtet werden.

2. Verfahren nach Anspruch 1, **dadurch gekennzeichnet, dass** die höchsten Feldstärken des elektrischen Wechselfelds im Bereich von 0,5 MV/m bis 10 MV/m liegen und/oder dadurch dass das Anlegen des elektrischen Wechselfeldes bei einer Wechselspannung im Bereich von 5 bis 100 V und einer Frequenz im Bereich von 1 kHz bis 20 MHz geschieht.

3. Verfahren nach Anspruch 1 oder 2, **dadurch gekennzeichnet, dass** die Anzahl der Erhebungen mindestens 100, vorzugsweise mindestens 1000, mindestens 10000 oder mehr beträgt.

4. Verfahren nach einem der Ansprüche 1 bis 3, **dadurch gekennzeichnet, dass** die Substratoberfläche durch eine oder mehrere Lagen von Metall-Nanopartikeln, insbesondere Gold-Nanopartikeln, bereitgestellt wird.

5. Verfahren nach einem der Ansprüche 1-4, **dadurch gekennzeichnet, dass** die Substratoberfläche eine Vielzahl von Nano-Punktelektroden in einer vorgegebenen Anordnung aufweist.

6. Verfahren nach einem der Ansprüche 1-5, **dadurch gekennzeichnet, dass** die Erhebungen der Substratoberfläche einen mittleren Abstand im Bereich von 1-2000 nm, vorzugsweise 1-200 nm, bevorzugter 1-50 nm, aufweisen.

7. Verfahren nach einem der Ansprüche 1-6, **dadurch gekennzeichnet, dass** die zu immobilisierenden Objekte aus der Gruppe aus Molekülen, insbesondere Biomolekülen, Molekülclustern, Nanoaggregaten, Nano- und Mikropartikeln ausgewählt sind.

8. Verfahren nach Anspruch 7, **dadurch gekennzeichnet, dass** die Biomoleküle Proteine, Proteinkomplexe und Peptide, wobei die Proteine oder Peptide insbesondere Antikörper oder Enzyme sind, Nukleinsäuren, Lipide oder Saccharide umfassen.

9. Verfahren nach einem der Ansprüche 1-8, **dadurch gekennzeichnet, dass** die immobilisierten Nano- oder Mikroobjekte funktionelle Makromoleküle oder Molekülaggregate sind und die Ausrichtung dieser Makromoleküle oder Molekülaggregate im elektrischen Feld so erfolgt, dass die aktiven Zentren oder funktionellen Bindungsstellen nach der Immobilisierung zugänglich bleiben.

10. Verfahren nach Anspruch 9, **dadurch gekennzeichnet, dass** die funktionellen Makromoleküle oder Molekülaggregate nach der Immobilisierung einem Funktions- oder Aktivitätstest unterworfen werden, um festzustellen, ob die aktiven Zentren oder funktionellen Bindungsstellen nach der Immobilisierung zugänglich bleiben, und die Polarisierung und/oder Ausrichtung derjenigen Makromoleküle oder Molekülaggregate, die einen vorgegebenen Referenzwert in dem Funktions- oder Aktivitätstest nicht erreichen, durch Änderung der Ladungsverteilung und/oder Molekülgeometrie, z.B. durch Einführen oder Entfernen eines Substituenten, der eine Ladung trägt, so lange modifiziert wird, bis die gewünschte Polarisierung und/oder Ausrichtung erreicht ist.

11. Verfahren nach Anspruch 9 oder 10, **dadurch gekennzeichnet, dass** die funktionellen Makromoleküle Enzyme, Antikörper oder andere spezifisch bindende Moleküle, oder Katalysatoren sind.

12. Vorrichtung zur gerichteten Immobilisierung von Nano- oder Mikroobjekten auf einer Substratoberfläche, umfassend
a) eine raue Substratoberfläche, welche eine leitfähige Schicht umfasst, wobei die Rauigkeit der Substratoberfläche durch nanometerskalige erhabene Strukturen, welche durch Aufbringen einer Paste mit einer Körnung im Nanometerbereich oder durch chemisches oder galvanisches Aufwachsen elektrisch leitfähiger Nanostrukturen gebildet werden, vorgegeben ist, sodass die Substratoberfläche eine Vielzahl von Erhebungen, d.h. mindestens 100, vorzugsweise mindestens 1000 oder mindestens 10000 oder mehr, mit lokalen Krümmungsradien in der Dimension der zu immobilisierenden Objekte aufweist,
b) mindestens eine Gegenelektrode in der Nähe der Substratoberfläche, und
c) Mittel zur Anlegung einer elektrischen Wechselspannung zwischen der Substratoberfläche und der mindestens einen Gegenelektrode.

13. Vorrichtung nach Anspruch 12, **dadurch gekennzeichnet, dass** die Rauigkeit der Substratoberfläche durch aufgebrachte Metall-Nanopartikel erzeugt wird.

14. Vorrichtung nach Anspruch 12 oder 13 oder Verfahren nach einem der Ansprüche 1-11, **dadurch gekennzeichnet, dass** die leitfähige Schicht frei liegt oder von einem 1-10 nm dicken isolierenden Film überzogen ist.

15. Raue Substratoberfläche mit einer immobilisierten Anordnung von polarisierten Nano- oder Mikroobjekten auf in einem elektrischen Wechselfeld, erhalten mit dem Verfahren nach einem der Ansprüche 1-11 und ferner **dadurch gekennzeichnet, dass** eine Vielzahl der Nano- oder Mikroobjekte, d.h. mindestens 100, vorzugsweise mindestens 1000 oder mindestens 10000 oder mehr, in ausgerichteter Form auf der Substratoberfläche vorliegt.

## Claims

1. Method for directed immobilisation of nano- or micro-objects on a substrate surface, comprising
a) provision of a rough substrate surface comprising a conductive layer, wherein the roughness of the substrate surface is determined by nanometre-scale elevated structures formed by the application of a paste with a grain size in the nanometre range or through the chemical or galvanic growth of electrically conductive nanostructures, so that the substrate surface has a plurality of elevations with local curvature radii of the dimension of the objects to be immobilised,
b) provision of polarisable nano- or micro-objects which have an induced dipole in an alternating electrical field, on or in the vicinity of the substrate surface,
c) application of an alternating electrical voltage between the substrate surface and at least one counter electrode, through which an alternating electrical field with local field gradients is generated and the polarised nano- or micro-objects are preferably attracted by the elevations of the substrate surface and aligned with their dipole axis in parallel to the electrical field lines.

2. The method according to claim 1, **characterised in that** the highest field strengths of the alternating electrical field are in the range of 0.5 MV/m to 10 MV/m and/or **in that** the application of the alternating electrical field takes place with an alternating voltage of 5 to 100 V and a frequency in the range of 1 kHz to 20 MHz.

3. The method according to claim 1 or 2, **characterised in that** the number of elevations is at least 100, preferably at least 1000, at least 10,000 or more.

4. The method according to any one claims 1-3, **characterised in that** the substrate surface is provided by one or more layers of metal nanoparticles, in particular gold nanoparticles.

5. The method according to any of claims 1-4, **characterised in that** the substrate surface comprises a plurality of nano point electrodes in a predetermined arrangement.

6. The method according to any of claims 1-5, **characterised in that** the elevations of the substrate surface have a mean spacing in the range of 1-2000 nm, preferably 1-200 nm, more preferably 1-50 nm.

7. The method according to any of claims 1-6, **characterised in that** the objects to be immobilised are selected from the groups of molecules, in particular biomolecules, molecule clusters, nano-aggregates, nano- and micro-particles.

8. The method according to claim 7, **characterised in that** the biomolecules comprise proteins, protein complexes and peptides, wherein the proteins or peptides are, in particular, antibodies or enzymes, nucleic acids, lipids or saccharides.

9. The method according to any of claims 1-8, **characterised in that** the immobilised nano- or micro-objects are functional macro-molecules or molecule aggregates and the alignment of these macro-molecules or molecule aggregates in the electrical field takes place in such a way that the active centres or functional binding sites remain accessible after immobilisation.

10. The method according to claim 9, **characterised in that** after immobilisation the functional macro-molecules or molecule aggregates are subjected to a function or activity test in order to determine whether the active centres or functional binding sites remain accessible after immobilisation and the polarisation and/or alignment of those macro-molecules or molecule aggregates which do not achieve a predetermined reference value in the function or activity test, through modifying the charge distribution and/or molecule geometry, e.g. through introducing or removing a substituent carrying a charge, are modified for so long until the desired polarisation and/or alignment is achieved.

11. The method according to claim 9 or 10, **characterised in that** the functional macro-molecules are enzymes, antibodies or other specifically binding molecules or catalysts.

12. A device for directed immobilisation of nano- or micro-objects on a substrate surface, comprising
a) a rough substrate surface comprising a conductive layer, wherein the roughness of the substrate surface is determined by nanometre-scale elevated structures formed by the application of a paste with a grain size in the nanometre range or through the chemical or galvanic growth of electrically conductive nanostructures, so that the substrate surface has a plurality of elevations, i.e. at least 100, preferably at least 1000 or at least 10,000 or more, with local curvature radii of the dimension of the objects to be immobilised,
b) at least one counter electrode in the vicinity of the substrate surface, and
c) means for applying an alternating electrical voltage between the substrate surface and the at least one counter electrode.

13. The device according to claim 12, **characterised in that** the roughness of the substrate surface is produced by applied metal nanoparticles.

14. The device according to claim 12 or 13 or the method according to any one of claims 1-11, **characterised in that** the conductive layer is exposed or is covered with a 1-10 nm thick insulating film.

15. A rough substrate surface with an immobilised arrangement of polarised nano- or micro-objects in an alternating electrical field obtained with the method according to any of claims 1-11 and also **characterised in that** a plurality of nano- or micro-objects, i.e. at least 100, preferably at least 1000 or at least 10,000 or more, is present in aligned form on the substrate surface.

## Revendications

1. Procédé servant à immobiliser de manière orientée des nano- ou micro-objets sur une surface de substrat, comprenant les étapes consistant à :
a) fournir une surface de substrat rugueuse, qui comprend une couche conductrice, dans lequel la rugosité de la surface de substrat est spécifiée par des structures surélevées nanométriques, qui sont formées par l'application d'une pâte présentant une granulométrie de l'ordre du nanomètre ou par un dépôt chimique ou galvanique de nanostructures électroconductrices, de sorte que la surface de substrat présente une pluralité de parties surélevées présentant des rayons de courbure locaux à la dimension des objets à immobiliser ;
b) fournir des nano- ou des micro-objets polarisables, qui présentent, dans un champ alternatif électrique, un dipôle induit sur ou à proximité de la surface de substrat ;
c) appliquer une tension alternative électrique entre la surface de substrat et au moins une contre-électrode, ce qui permet de faire apparaître un champ alternatif électrique présentant des gradients de champ locaux et ce qui permet d'attirer de manière préférée par les parties surélevées de la surface de substrat les nano- ou micro-objets polarisés et de les orienter par leur axe de dipôle de manière parallèle par rapport aux lignes de champ électriques.

2. Procédé selon la revendication 1, **caractérisé en ce que** les intensités de champ les plus élevées du champ alternatif électrique se situent dans la plage allant de 0,5 MV/m à 10 MV/m, et/ou **en ce que** l'application du champ alternatif électrique a lieu à une tension alternative située dans la plage allant de 5 à 100 V et à une fréquence située dans la plage allant de 1 kHz à 20 MHz.

3. Procédé selon la revendication 1 ou 2, **caractérisé en ce que** le nombre des parties surélevées est d'au moins 100, de préférence d'au moins 1 000, d'au moins 10 000 ou plus.

4. Procédé selon l'une quelconque des revendications 1 à 3, **caractérisé en ce que** la surface de substrat est fournie par un ou plusieurs couches de nanoparticules de métal, en particulier de nanoparticules d'or.

5. Procédé selon l'une quelconque des revendications 1 - 4, **caractérisé en ce que** la surface de substrat présente une pluralité de nano-électrodes par points selon une disposition spécifiée.

6. Procédé selon l'une quelconque des revendications 1 - 5, **caractérisé en ce que** les parties surélevées de la surface de substrat présentent une distance moyenne située dans la plage de 1 - 2 000 nm, de préférence de 1 - 200 nm, de manière plus préférée de 1-50 nm.

7. Procédé selon l'une quelconque des revendications 1 - 6, **caractérisé en ce que** les objets à immobiliser sont choisis parmi le groupe composé de molécules, en particulier de biomolécules, de grappes de molécules, de nano-agrégats, de nano- et microparticules.

8. Procédé selon la revendication 7, **caractérisé en ce que** les biomolécules comprennent des protéines, des complexes de protéines et des peptides, dans lequel les protéines ou les peptides sont en particulier des anticorps ou des enzymes, des acides nucléiques, des lipides ou des saccharides.

9. Procédé selon l'une quelconque des revendications 1 - 8, **caractérisé en ce que** les nano-ou micro-objets immobilisés sont des macromolécules ou des agrégats de molécules fonctionnels, et l'orientation desdites macromolécules ou agrégats de molécules est effectuée dans le champ électrique de telle sorte que les centres actifs ou les points de liaison fonctionnels restent accessibles après l'immobilisation.

10. Procédé selon la revendication 9, **caractérisé en ce que** les macromolécules ou les agrégats de molécules fonctionnel(le)s sont soumis(es), après l'immobilisation, à un test de fonctionnement ou d'activité afin de constater si les centres actifs ou les points de liaison fonctionnels restent accessibles après l'immobilisation, et la polarisation et/ou l'orientation des macromolécules ou agrégats de molécules, qui précisément n'atteignent pas une valeur de référence spécifiée lors du test de fonctionnement ou d'activité, sont modifiées par le changement de la répartition de charge et/ou de la géométrie de molécule, par exemple en introduisant ou en retirant un substituant, qui supporte une charge, jusqu'à ce la polarisation et/ou l'orientation souhaitées soient atteintes.

11. Procédé selon la revendication 9 ou 10, **caractérisé en ce que** les macromolécules fonctionnelles sont des enzymes, des anticorps ou d'autres molécules à liaisons spécifiques, ou des catalyseurs.

12. Dispositif servant à immobiliser de manière orientée des nano- ou micro-objets sur une surface de substrat, comprenant
a) une structure de substrat rugueuse, qui comprend une couche conductrice, dans lequel dans lequel la rugosité de la surface de substrat est spécifiée par des structures surélevées nanométriques, qui sont formées par l'application d'une pâte présentant une granulométrie de l'ordre du nanomètre ou par un dépôt chimique ou galvanique de nanostructures électroconductrices, de sorte que la surface de substrat présente une pluralité de parties surélevées, en d'autres termes au moins 100, de préférence au moins 1 000 ou au moins 10 000 ou plus, présentant des rayons de courbure locaux à la dimension des objets à immobiliser ;
b) au moins une contre-électrode à proximité de la surface de substrat ; et
c) des moyens servant à appliquer une tension alternative électrique entre la surface de substrat et l'au moins une contre-électrode.

13. Dispositif selon la revendication 12, **caractérisé en ce que** la rugosité de la surface de substrat est produite par des nanoparticules de métal appliquées.

14. Dispositif selon la revendication 12 ou 13 ou procédé selon l'une quelconque des revendications 1-11, **caractérisé en ce que** la couche conductrice est dégagée ou est recouverte d'un film isolant présentant une épaisseur de 1-10 nm.

15. Surface de substrat rugueuse comprenant un ensemble immobilisé de nano- ou micro-objets polarisés dans un champ alternatif électrique, obtenue avec le procédé selon l'une quelconque des revendications 1-11, et **caractérisée en outre en ce qu'**une pluralité des nano- ou micro-objets, en d'autres termes 100, de préférence au moins 1 000 ou au moins 10 000 ou plus, est présente sous une forme orientée sur la surface de substrat.
